# EUROPÄISCHE PATENTSCHRIFT

(11) **EP 2 036 667 B1**
(45) Veröffentlichungstag und Bekanntmachung des Hinweises auf die Patenterteilung: **03.03.2010**
(21) Anmeldenummer: 08015901.5
(22) Anmeldetag: 10.09.2008
(51) Int. Cl.: B23Q 39/02, B23Q 39/04, B23Q 1/52

(54) **Bearbeitungsmaschine zur Bearbeitung von Werkstücken**
Processing machine for processing materials
Machine de traitement destinée au traitement de pièces à usiner

(30) Priorität: 14.09.2007 DE 102007045591
(43) Veröffentlichungstag der Anmeldung: 18.03.2009
(73) Patentinhaber: Carl Benzinger GmbH, 75180 Pforzheim (DE)
(72) Erfinder: Jehle, Rainer, 75399 Unterreichenbach (DE); Jehle, Dieter, 75180 Pforzheim (DE)
(74) Vertreter: Vogler, Bernd

(56) Entgegenhaltungen:
- EP-A- 1 160 052
- EP-A- 1 574 273
- DE-A1- 4 310 038
- JP-A- 6 134 601

## Beschreibung

Die Erfindung betrifft eine Bearbeitungsmaschine zur Bearbeitung von Werkstücken, insbesondere zur Fräs- und/oder Drehbearbeitung, mit einer rotatorisch um eine erste Spindelachse antreibbaren ersten Werkstückspindel und einer rotatorisch um eine zweite Spindelachse antreibbaren zweiten Werkstückspindel, wobei die beiden Spindelachsen jeweils in einer Z-Raumrichtung eines durch drei senkrecht aufeinander stehende Raumrichtungen X, Y und Z gebildeten Koordinatensystems ausgerichtet sind, und wobei die zweite Werkstückspindel in Z-Raumrichtung verfahrbar ausgebildet ist, und mit wenigstens einem den Werkstückspindeln zugeordneten Werkzeugkopf, der in Y-Raumrichtung verfahrbar und um eine in X-Raumrichtung orientierte Schwenkachse schwenkbar gelagert ist.

Eine Bearbeitungsmaschine dieser Art ist der Anmelderin aus einem internen, druckschriftlich nicht verfügbaren Stand der Technik bekannt, wobei hier die erste Werkstückspindel unverfahrbar angeordnet ist, während die zweite Werkstückspindel in Z-Raumrichtung verfahren werden kann. Eine unverfahrbare Anordnung der ersten Werkstückspindel ist dann sinnvoll, wenn schwere Werkstückstangen, aus denen dann die einzelnen Werkstücke gefertigt werden, verwendet werden, da das Verfahren einer derart schweren Einheit aus Werkstückspindel und Werkstückstange schwierig zu handhaben ist. Es ist ferner ein verschwenkbarer Werkzeugkopf vorgesehen, der in X-, Y- und Z-Raumrichtung verfahrbar ist. Durch seine Verschwenkbarkeit kann der Werkzeugkopf entweder Werkstücke an der ersten Werkstückspindel oder Werkstücke an der zweiten Werkstückspindel bearbeiten bzw. ist es möglich, das in der ersten Werkstückspindel an der Vorderseite bearbeitete Werkstück durch die zweite Werkstückspindel aufzunehmen und durch den Werkzeugkopf an dessen Rückseite zu bearbeiten. Da die erste Werkstückspindel unverfahrbar und die zweite Werkzeugspindel lediglich in Z-Raumrichtung verfahrbar ist, ist es notwendig, dass zwischen den beiden Werkstückspindeln ein relativ großer Abstand vorliegt, um das Verschwenken des Werkzeugkopfes von der einen zur anderen Werkstückspindel nicht zu behindern.

Dies führt jedoch dazu, dass die Bearbeitungsmaschine in Z-Raumrichtung eine relativ große Baulänge besitzt. Die große Baulänge führt zu großen thermischen und dynamischen Verlagerungen, die sich negativ auf die Präzision, die mit einer solchen Bearbeitungsmaschine erreicht werden kann, auswirken.

Auf den Werkzeugkopf entfallen bei der aus dem Stand der Technik bekannten Bearbeitungsmaschine drei Linearachsen, da eine Verfahrbarkeit in allen drei Raumrichtungen gegeben ist. Je mehr Linearachsen auf eine Einheit vereint sind, desto nachteiliger wirkt sich dies auf deren Stabilität aus, was sich letztendlich auch negativ auf die Präzision beim Bearbeiten der Werkstücke auswirkt.

In der EP-A-1 574 273 ist ein Werkstückträger offenbart, an dem zwei nebeneinander und parallel mit ihren Spindelachsen zueinander verlaufende Werkstückspindeln angeordnet sind. Es ist davon auszugehen, dass die Werkstückträger und damit die beiden Werkstückspindeln sowohl in X- als auch in Z-Richtung verfahrbar sind. Dem Werkstückträger sind zwei Werkzeugträger zugeordnet, die jeweils einen Revolverkopf tragen. Beide Werkzeugträger sind jeweils nur in eine Linearrichtung verfahrbar, wobei der eine ausschließlich in die Z-Richtung und der andere Werkzeugträger ausschließlich in die X-Richtung verfahrbar ist.

Aufgabe der Erfindung ist es, eine Bearbeitungsmaschine der eingangs erwähnten Art zu schaffen, mit der sich Werkstücke mit sehr hoher Präzision bearbeiten lassen.

Diese Aufgabe wird durch eine Bearbeitungsmaschine mit den Merkmalen des unabhängigen Anspruchs 1 gelöst. Weiterbildungen der Erfindung sind in den Unteransprüchen dargestellt.

Die erfindungsgemäße Bearbeitungsmaschine zeichnet sich dadurch aus, dass die beiden Werkstückspindeln in einer jeweiligen Bearbeitungsposition parallel versetzt zueinander angeordnet und jeweils in X- und Z-Raumrichtung verfahrbar ausgebildet sind.

Durch die versetzte Anordnung der beiden Werkstückspindeln ist ein sehr kompakter Aufbau und eine geringe Baulänge der Maschine in Z-Raumrichtung realisierbar. Dadurch können die thermischen und dynamischen Verlagerungen minimiert werden, was als Grundlage für hohe Präzision dient. Die Bearbeitungsmaschine ist zur Bearbeitung, insbesondere zum Drehen und/oder Fräsen von Werkstücken kleinerer Abmessungen mit sehr hoher Präzision geeignet. Da beide Werkstückspindeln sowohl in der X- als auch in der Z-Raumrichtung verfahrbar sind, ergibt sich ein symmetrischer Aufbau der Bearbeitungsmaschine, so dass identische Bearbeitungsmöglichkeiten an beiden Werkstückspindeln vorliegen. Auch dies erhöht die Genauigkeit bzw. Präzision bei der Bearbeitung von Werkstücken.

In besonders bevorzugter Weise ist der Werkzeugkopf frei von einer Verfahrbarkeit in der X- und Z-Raumrichtung ausgebildet. Dadurch kann das aus dem Stand der Technik bekannte Stabilitätsproblem in Folge einer Vereinigung dreier Linearachsen auf den Werkzeugkopf behoben werden. Die drei Linearachsen des Werkzeugkopfes können in eine Anordnung mit zwei Linearachsen an den jeweiligen Werkstückspindeln und einer am Werkzeugkopf verbleibenden Linearachse aufgetrennt werden. Beim Stand der Technik wird die Bauhöhe über dem Maschinenbett maßgeblich durch die übereinander geordneten Linearachsen des Werkzeugkopfes bestimmt. Durch die Auftrennung der Achsen auf die Werkstückspindeln bzw. den Werkzeugkopf wird ein Aufbau mit geringerer Bauhöhe über dem Maschinenbett erreicht. Auch dadurch werden die thermischen und dynamischen Verlagerungen verringert, was zu einer Erhöhung der Präzision bei der Bearbeitung der Werkstücke führt.

Bei einer Weiterbildung der Erfindung ist der Werkzeugkopf als Werkzeugspindel ausgebildet. Prinzipiell wäre es jedoch auch möglich, dass der Werkzeugkopf nicht rotatorisch angetrieben ist und zur reinen Drehbearbeitung von Werkstücken dient.

In besonders bevorzugter Weise ist der Werkzeugkopf jedoch zur Aufnahme von Fräs- und Drehwerkzeugen ausgebildet. Je nach Bedarf kann also eine Fräs- oder Drehbearbeitung des Werkstücks erfolgen. Auch ist es natürlich möglich, ein einzelnes Werkstück sowohl durch Fräsen als auch durch Drehen zu bearbeiten.

Korrespondierend hierzu können die Werkstückspindeln jeweils eine Antriebseinheit aufweisen, die zur Drehpositionierung für die Fräsbearbeitung und zur Rotation für die Drehbearbeitung ausgebildet sind.

Bei einer Weiterbildung der Erfindung weisen die Werkstückspindeln jeweils Schiebemittel zum gesteuerten Durchschieben einer Werkstückstange auf. Durch die kompakte Bauweise der Bearbeitungsmaschine ist das Arbeiten von der Kurzstange oder das Bearbeiten von Einlegeteilen mit hoher Präzision möglich.

In besonders bevorzugter Weise sind die Werkstückspindeln jeweils auf eine Kreuzschlittenanordnung verfahrbar gelagert, die übereinander angeordnet einen sich in X-Raumrichtung erstreckenden X-Schlitten und einen sich in Z-Raumrichtung erstreckender Z-Schlitten aufweist. Es ist möglich, dass der X-Schlitten über dem Z-Schlitten angeordnet ist und umgekehrt. Bei einer Anordnung des Z-Schlittens über dem X-Schlitten ist es möglich, einen großen Hub in X-Raumrichtung zu realisieren, ohne dass die Stabilität der Anordnung leidet. Bei derartig großen Hüben in X-Raumrichtung würde bei einer umgekehrten Anordnung der X-Schlitten in nachteiliger Weise relativ weit über den Z-Schlitten hinaus stehen.

Besonders bevorzugt ist zusätzlich zum schwenkbaren Werkzeugkopf wenigstens eine weitere Bearbeitungsstation zur Werkstückbearbeitung vorgesehen. In besonders bevorzugter Weise handelt es sich bei einer der weiteren Bearbeitungsstationen um eine Fräs-/Drehstation zur Fräs- und/oder Drehbearbeitung von Werkstücken. Dadurch ist es möglich, an beiden Werkstückspindeln gleichzeitig Werkstücke zu bearbeiten.

Die Fräs-/Drehstation kann ein Werkzeugmagazin in Form eines Drehrevolvers zur Aufnahme von unterschiedlichen Werkzeuganordnungen, insbesondere angetriebenen Fräsköpfen und/oder Drehmeißeln, aufweisen.

In besonders bevorzugter Weise ist die Fräs-/Drehstation unverfahrbar ausgebildet. Im Gegensatz zu einer aus dem zuvor beschriebenen Stand der Technik bekannten weiteren Bearbeitungsstation, die in X- und Z-Raumrichtung verfahrbar ist, wodurch die Gesamtzahl der Linearachsen sechs beträgt, kann dadurch die Gesamtzahl der Linearachsen auf fünf verringert werden. Vorteilhafterweise besitzt die Bearbeitungsmaschine also lediglich fünf Linearachsen und damit eine Linearachse weniger als die bisher bekannten Bearbeitungsmaschinen. Dies führt zu einem Preisvorteil gegenüber herkömmlichen Bearbeitungsmaschinen. Alternativ zu der unverfahrbaren Ausbildung der Fräs-/Drehstation ist es auch möglich, dass die Fräs-/Drehstation in Y-Raumrichtung verfahrbar ausgebildet ist.

Bei einer Weiterbildung der Erfindung weist die Bearbeitungsmaschine ein Maschinenbett auf, das in einer durch die X- und Z-Raumrichtung aufgespannten Ebene im Winkel zur Horizontalen ausgerichtet ist. Die Bearbeitungsmaschine kann also als Schrägbett-Maschine ausgebildet sein. Die schräge Einbaulage führt wiederum zu einer Erhöhung der Kompaktheit der Bearbeitungsmaschine.

Ein bevorzugtes Ausführungsbeispiel der Erfindung ist in der Zeichnung dargestellt und wird im Folgenden näher erläutert. In der Zeichnung zeigen:
- Figur 1: eine perspektivische Draufsicht auf ein bevorzugtes Ausführungsbeispiel der erfindungsgemäßen Bearbeitungsmaschine,
- Figur 2: einen Querschnitt durch die Bearbeitungsmaschine, samt darauf gelagerter Bearbeitungseinheit, wobei hier neben dem Maschinenbett auch die Peripherie der Maschine gezeigt ist,
- Figur 3: eine vergrößerte Darstellung der Einzelheit A aus Figur 2,
- Figur 4: eine schematische Draufsicht auf die Funktionseinheiten der Bearbeitungsmaschine von Figur 1, wobei der Werkzeugkopf eine Bearbeitung an der ersten Werkstückspindel und die Fräs-/Drehstation eine Bearbeitung an der zweiten Werkstückspindel durchführt und
- Figur 5: eine schematische Draufsicht auf die Funktionseinheiten der Bearbeitungsmaschine von Figur 1, wobei eine gegenüber der Figur 4 umgekehrte Situation dargestellt ist, nämlich der Fräskopf führt eine Bearbeitung an der zweiten Werkstückspindel aus, während die Fräs-/Drehstation eine Bearbeitung an der ersten Werkstückspindel ausführt.

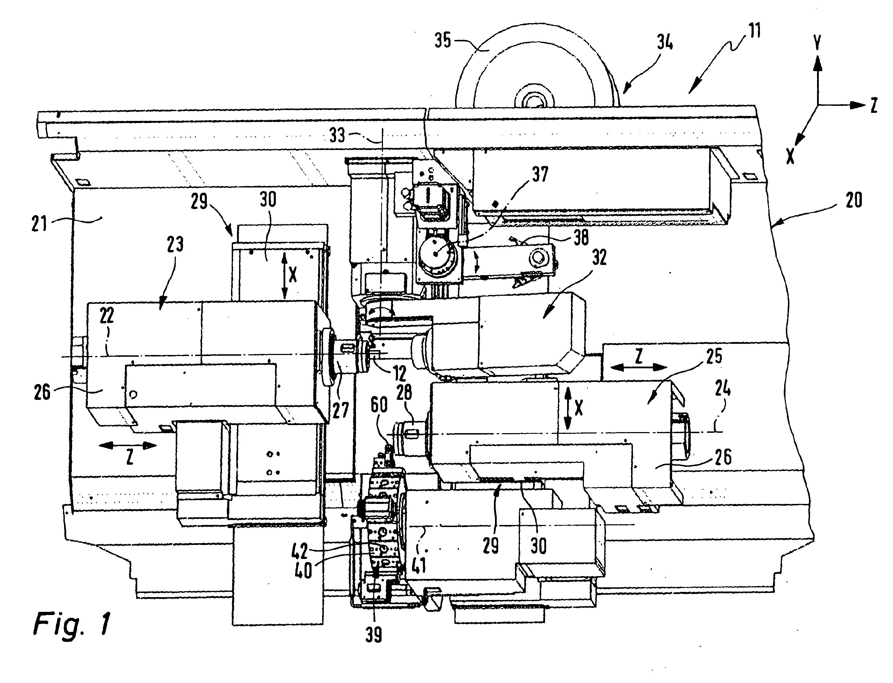

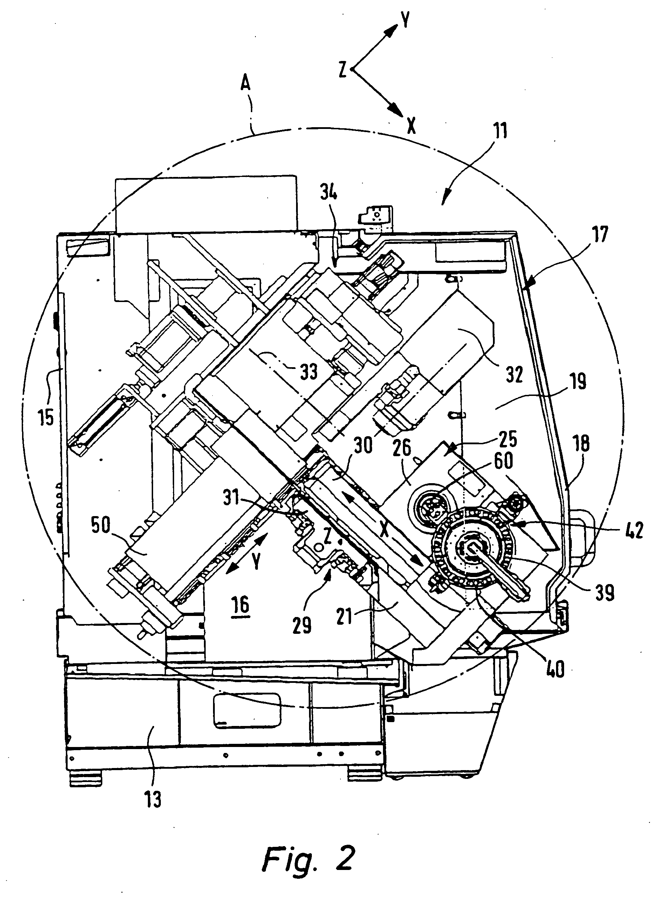

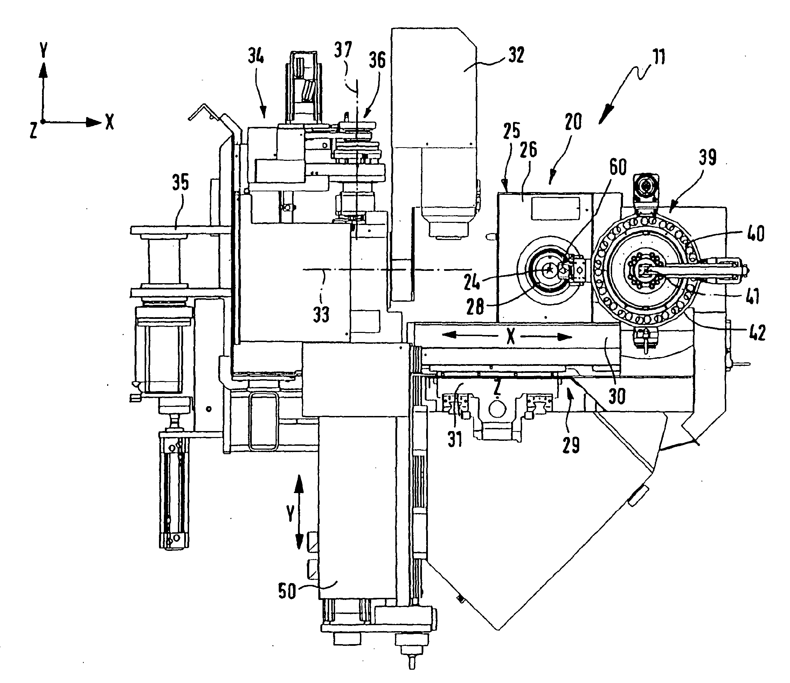

Die Figuren 1 bis 4 zeigen ein bevorzugtes Ausführungsbeispiel der erfindungsgemäßen Bearbeitungsmaschine 11 zur Bearbeitung von Werkstücken 12. Wie insbesondere in Figur 2 gezeigt, besitzt die Bearbeitungsmaschine 11 ein in der Regel längliches Maschinengestell 13, das die Funktionseinheiten der Bearbeitungsmaschine 11 trägt. Eine dieser Funktionseinheiten ist ein Maschinengehäuse 14, das von einer sich im Wesentlichen über die gesamte Länge des Maschinengestells 13 verlaufenden Rückwand 15, zwei im Wesentlichen im rechten Winkel jeweils an den beiden Enden der Rückwand 15 angeordneten Seitenwänden 16 und einer die Vorderseite der Bearbeitungsmaschine 11 bildenden Maschinenhaube 17 mit Sichtfenster gebildet wird. Die Maschinenhaube 17 ist mit einer Schiebetür 18 versehen, um den dahinter liegenden Arbeitsraum 19 der Bearbeitungsmaschine 11 zugänglich zu machen.

Herzstück der Bearbeitungsmaschine 11 ist eine Bearbeitungseinheit 20, die ein schräg, insbesondere im Winkel von 45° gegenüber der Horizontalen geneigtes Maschinenbett 21 aufweist, wodurch auch von einer Schrägbett-Bearbeitungsmaschine 11 gesprochen werden kann. Die Schrägbett-Anordnung führt zu einem kompakten Aufbau der Bearbeitungsmaschine 11. Wie insbesondere in Figur 1 dargestellt, sitzen auf dem Maschinenbett 21 eine rotatorisch um eine erste Spindelachse 22 antreibbare erste Werkstückspindel 23 und eine rotatorisch um eine zweite Spindelachse 24 antreibbare zweite Werkstückspindel 25. Die beiden Spindelachsen 22, 24 sind jeweils in einer Z-Raumrichtung eines durch drei senkrecht aufeinander stehende Raumrichtungen X, Y und Z gebildeten Koordinatensystems ausgerichtet. Durch die Schrägbett-Anordnung liegt das in der X- Z-Ebene liegende Maschinenbett 21 also im Winkel zur Horizontalen.

Die beiden Werkstückspindeln 23, 25 werden jeweils durch einen integrierten Antriebsmotor rotatorisch angetrieben, wobei die Antriebsmotoren zur Drehpositionierung für die Fräsbearbeitung und zur Rotation für die Drehbearbeitung ausgebildet sind. Die beiden Werkstückspindeln 23, 25 sind jeweils noch durch ein Spindelgehäuse 26 eingehaust, aus dem lediglich seitlich die beiden Werkstückaufnahmen 27, 28 herausragen. Dabei weist die Werkstückaufnahme 27 der ersten Werkstückspindel 25 in die entgegengesetzte Richtung als die zweite Werkstückaufnahme 28 der zweiten Werkstückspindel 25. Die Werkstückspindeln 23, 25 sind derart ausgelegt, dass eine Stangenbearbeitung von einer mittels Schiebemitteln durch die jeweilige Werkstückspindel 23, 25 hindurchzuschiebenden Werkstückstange möglich ist. Alternativ ist es jedoch auch möglich, in die jeweiligen Werkstückaufnahmen 27, 28 einzulegende Einlegeteile zu bearbeiten.

Ein wesentliches Merkmal der beiden Werkstückspindeln 23, 25 ist, dass sie in einer jeweiligen Bearbeitungsposition parallel versetzt zueinander angeordnet und jeweils in X- und Z-Raumrichtung verfahrbar ausgebildet sind. Die Verfahrbarkeit wird hier durch jeweils eine Kreuzschlittenanordnung 29 erreicht, die übereinander angeordnet einen sich in X-Raumrichtung erstreckenden X-Schlitten 30 und einen sich in Z-Raumrichtung erstreckenden Z-Schlitten 31 aufweist.

Wie in Figur 2 dargestellt, ist hier beispielhaft der X-Schlitten 30 über dem Z-Schlitten angeordnet. Es wäre doch auch eine umgekehrte Anordnung denkbar, also dass der Z-Schlitten 31 über dem X-Schlitten 30 liegt. Hierzu wird nachfolgend noch näher eingegangen.

Die Bearbeitungsmaschine 11 besitzt ferner einen Werkzeugkopf 32 in Form einer rotatorisch angetriebenen Werkzeugspindel. Der Werkzeugkopf 32 ist zur Aufnahme von Fräs- und Drehwerkzeugen ausgebildet, so dass wahlweise eine Fräs- und/oder Drehbearbeitung des zu bearbeitenden Werkstücks 12 möglich ist. Der Werkzeugkopf 32 ist in Y-Raumrichtung verfahrbar und um eine in X-Raumrichtung orientierte Schwenkachse 33 schwenkbar gelagert. Die Verfahrbarkeit in Y-Raumrichtung wird mittels eines sich in Y-Raumrichtung erstreckenden Führungsschlittens 50 erreicht. Wesentlich ist, dass die Schwenkachse 33 in Y-Richtung auf ungefähr derselben Höhe wie die Spindelachsen 22, 24 liegt, wodurch eine präzisere Zustellung des im Werkzeugkopf 32 gehalterten Werkzeugs 60 an das zu bearbeitende Werkstück 12 möglich ist. Der Werkzeugkopf 32 ist so ausgebildet, dass die Schneiden der Werkzeuge 60 auf der Schwenkachse 33 liegen. Dadurch sind nur geringe Kompensationsbewegungen beim Fünf-Achs-Fräsen notwendig.

Der Werkzeugkopf 32 wird über eine Werkzeugwechseleinrichtung 34 mit Werkzeugen 60 versorgt. Die Werkzeugwechseleinrichtung 34 weist einen Werkzeugwechsler 35 auf, der hier beispielhaft in Form eines scheibenartigen Werkzeugwechslers 35 dargestellt ist, mit zwei Scheiben, an deren Umfang sich verteilt Werkzeugpositionen befinden, in denen Werkzeuge 60, gegebenenfalls samt Werkzeugaufnahme, sitzen. Je nach Durchmesser der Scheiben ist die Zahl der Werkzeugpositionen variierbar, beispielsweise können sich 20 bis 30 Werkzeugpositionen an einer jeweiligen Scheibe befinden. Die Werkzeugwechseleinrichtung 34 weist ferner noch einen Werkzeugwechslerarm 36 auf, der zur Übergabe des aus dem Werkzeugwechslers 35 entnommenen Werkzeugs 60 an den Werkzeugkopf 32 dient. Der Werkzeugwechslerarm 36 ist um eine in Y-Raumrichtung ausgerichtete Schwenkachse 37 schwenkbar gelagert und besitzt beispielsweise an seiner Vorderseite zwei Greifscheren 38 zum Greifen der Werkzeuge 60.

Die Bearbeitungsmaschine 11 besitzt ferner eine weitere Bearbeitungsstation 39 in Form einer Fräs- /Drehstation zur Fräsund Drehbearbeitung von Werkstücken 12. Es ist also möglich, zwei Werkstücke 12 gleichzeitig zu bearbeiten, nämlich ein Werkstück mittels des Werkzeugkopfs 32 und ein anderes Werkstück 12 mittels der Fräs- /Drehstation. Die Fräs-/Drehstation weist ein Werkzeugmagazin 40 in Form eines Drehrevolvers auf. Der Drehrevolver ist um eine Revolverachse 41 drehbar gelagert und besitzt am Außenumfang verteilt Werkzeugaufnahmen 42 zur Aufnahme von Werkzeuganordnungen, beispielsweise von angetriebenen Fräsköpfen und und/oder Drehmeißeln. Die Fräs- /Drehstation ist normalerweise unverfahrbar ausgebildet, kann aber auch in Y-Raumrichtung verfahren werden.

Es ist denkbar, zusätzlich zum Werkzeugkopf 32 und der Fräs-/Drehstation noch eine weitere Bearbeitungsstation hinzuzufügen, wobei dann der Hub in X-Raumrichtung verlängert werden müsste. Bei einer derartigen Anordnung ist es insbesondere aus Stabilitätsgründen sinnvoll, dass der X-Schlitten direkt auf dem Maschinenbett 21 sitzt und der Z-Schlitten 31 darüber angeordnet ist. Als weitere Bearbeitungsstation wäre beispielsweise eine solche für die Laserbearbeitung von Werkstücken 12 oder auch eine zusätzliche Schleifstation denkbar.

Die versetzte Anordnung der beiden Werkstückspindeln 23, 25 in ihrer jeweiligen Bearbeitungsposition erlaubt es die beiden Werkstückspindeln 23, 25 in Z-Raumrichtung viel näher aneinander anzuordnen, wodurch die Baulänge in Z-Raumrichtung minimiert wird. Wie insbesondere in Figur 1 gezeigt, kann die zweite Werkstückspindel 25 bei Bearbeitung eines Werkstücks 12 durch den Werkzeugkopf 32 an der ersten Werkstückspindel 23 durch die Verfahrbarkeit in X-Raumrichtung aus dem Schwenkbereich des Werkzeugskopfs 35 weg gefahren werden. Durch die kurze Baulänge in Z-Raumrichtung erhöht sich die Kompaktheit der Bearbeitungsmaschine 11, wodurch die thermischen und dynamischen Verlagerungen minimiert werden können. Dadurch wird eine höhere Präzision bei der Bearbeitung von Werkstücken erzielt.

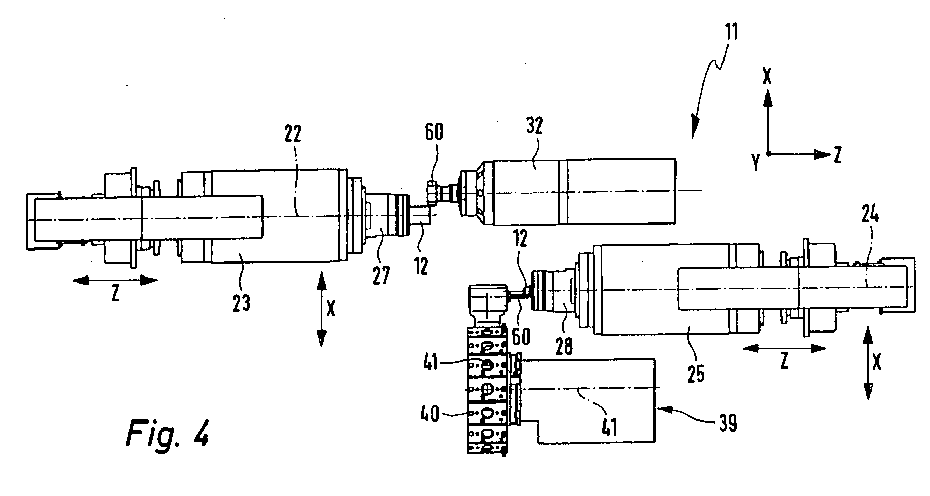

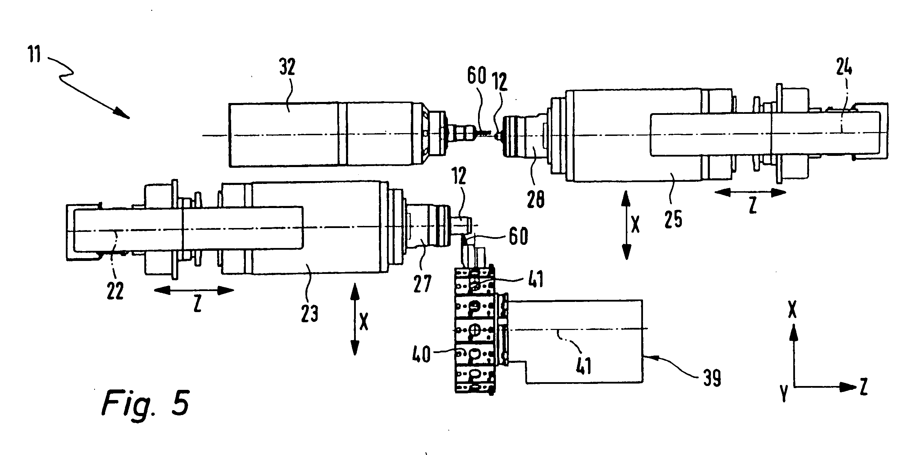

Die Figuren 4 und 5 zeigen zwei verschiedene Bearbeitungssituationen in der Bearbeitungsmaschine 11. Wie in Figur 4 dargestellt, wird hier ein Werkstück 12, beispielsweise ein Einlegeteil oder eine Werkstückstange, durch den Werkzeugkopf 32 an der ersten Werkstückspindel 23 bearbeitet. Es ist hier beispielhaft eine Fräsbearbeitung mittels einer Frässpindel dargestellt, wobei selbstverständlich auch alternativ eine Drehbearbeitung mittels am Werkzeugkopf 32 gehaltertem Drehmeißel erfolgen kann. In dieser Situation ist die zweite Werkstückspindel 25 in X-Richtung aus dem Schwenkweg des Werkzeugkopfes 32 weg gefahren, befindet sich also versetzt zur ersten Werkstückspindel 23. An der zweiten Werkstückspindel 25 kann gleichzeitig zur Bearbeitung an der ersten Werkstückspindel 23 eine Bearbeitung mit der Fräs- /Drehstation erfolgen, wobei hier beispielhaft eine Bearbeitung mittels eines Drehmeißels dargestellt ist. Auch hier ist es möglich, alternativ eine Fräsbearbeitung mittels eines angetriebenen Fräswerkzeugs auszuführen.

Figur 5 zeigt die Situation nach einem Bearbeitungswechsel. Dabei wird zunächst die erste Werkstückspindel 23 in X-Raumrichtung aus dem Schwenkweg des Werkzeugkopfs 32 herausgefahren. Danach schwenkt der Werkzeugkopf 32 um seine Schwenkachse 33 im Uhrzeigersinn, so dass er nun der zweiten Werkstückspindel 25 zugeordnet ist. Die zweite Werkstückspindel 25 wird nun in X-Richtung zum Werkzeugkopf 32 hin verfahren, wodurch die Fräs- und/oder Drehbearbeitung eines an der zweiten Werkstückspindel 25 gehalterten Werkstücks 12 beginnen kann. Gleichzeitig wurde ja die erste Werkstückspindel 23 in Richtung auf die Fräs- /Drehstation gefahren, wo dann insbesondere gleichzeitig eine Fräs- und/oder Drehbearbeitung eines an der ersten Werkstückspindel 23 gehalterten Werkstücks erfolgen kann.

Zum beidseitigen Bearbeiten von Werkstücken 12 muss eine Übergabe zwischen den beiden Werkstückspindeln 23, 25 stattfinden. Dazu fahren die Werkstückspindeln 23, 25 in X-Raumrichtung in eine koaxiale Stellung und fahren in Z-Richtung aufeinander zu damit eine Übergabe stattfinden kann. Beim Bearbeiten von der Werkstückstange wird das einseitig bearbeitete Werkstück 12 mittels eines Trennwerkzeugs, beispielsweise durch Abstechen, von der Werkstückstange getrennt. Es ist auch eine Übergabe mit versetzten Achsen möglich, wobei hierzu die beiden Werkstückspindeln 23, 25 nicht in eine koaxiale Stellung fahren, sondern versetzt zueinander ausgerichtet werden. Bei der Stangenbearbeitung erfolgt das Trennen hier durch ein Fräswerkszeug im Werkzeugkopf 32.

Das bevorzugte Ausführungsbeispiel der Bearbeitungsmaschine 11 weist insgesamt fünf Linearachsen auf und besitzt damit eine Linearachse weniger als aus dem Stand der Technik bekannte Bearbeitungsmaschinen. Der Wegfall einer Linearachse führt dazu, dass die Bearbeitungsmaschine zu einem niedrigerem Preis angeboten werden kann. Durch die kurze Bauweise und dem kompakten Aufbau der Bearbeitungsmaschine 11 wird wie erwähnt eine sehr hohe Präzision bei der Bearbeitung von Werkstücken erzielt. Ferner wurde das aus dem Stand der Technik bekannte Problem der mangelnden Stabilität des Werkzeugkopfes infolge einer Verfahrbarkeit in allen drei Raumrichtungen sowie der dadurch bedingten großen Bauhöhe über dem Maschinenbett 21 dadurch behoben, dass die drei Linearachsen in zwei jeweils den Werkstückspindeln 23, 25 zugeordneten X- und Z-Linearachsen sowie eine beim Werkzeugkopf 32 verbleibenden Y-Linearachsen aufgetrennt wurden.

## Patentansprüche

1. Bearbeitungsmaschine zur Bearbeitung von Werkstücken (12), insbesondere zur Fräs- und/oder Drehbearbeitung, mit einer rotatorisch um eine erste Spindelachse (22) antreibbaren ersten Werkstückspindel (23) und einer rotatorisch um eine zweite Spindelachse (24) antreibbaren zweiten Werkstückspindel (25), wobei die beiden Spindelachsen (22, 24) jeweils in einer Z-Raumrichtung eines durch drei senkrecht aufeinander stehende Raumrichtungen X, Y und Z gebildeten Koordinatensystems ausgerichtet sind, und wobei die zweite Werkstückspindel (25) in Z-Raumrichtung verfahrbar ausgebildet ist, und mit wenigstens einem den Werkstückspindeln (24, 25) zugeordneten Werkzeugkopf (32), der in Y-Raumrichtung verfahrbar und um eine in X-Richtung orientierte Schwenkachse (33) schwenkbar gelagert ist, **dadurch gekennzeichnet, dass** die beiden Werkstückspindeln (23, 25) in einer jeweiligen Bearbeitungsposition parallel versetzt zueinander angeordnet und jeweils in X- und Z-Raumrichtung verfahrbar ausgebildet sind.

2. Bearbeitungsmaschine nach Anspruch 1, **dadurch gekennzeichnet, dass** der Werkzeugkopf (32) frei von einer Verfahrbarkeit in X- und Z-Raumrichtung ausgebildet ist.

3. Bearbeitungsmaschine nach Anspruch 1 oder 2, **dadurch gekennzeichnet, dass** der Werkzeugkopf (32) als Werkzeugspindel ausgebildet ist.

4. Bearbeitungsmaschine nach Anspruch 3, **dadurch gekennzeichnet, dass** der Werkzeugkopf (32) zur Aufnahme von Fräs- und Drehwerkzeugen ausgebildet ist.

5. Bearbeitungsmaschine nach einem der vorhergehenden Ansprüche, **dadurch gekennzeichnet, dass** die Werkstückspindeln (23, 25) in einander entgegengesetzte Richtungen ausgerichtete Werkstückaufnahmen (27, 28) aufweisen.

6. Bearbeitungsmaschine nach einem der vorhergehenden Ansprüche, **dadurch gekennzeichnet, dass** die Werkstückspindeln (23, 25) jeweils einen Antriebsmotor aufweisen, der zur Drehpositionierung für die Fräsbearbeitung und zur Rotation für die Drehbearbeitung ausgebildet ist.

7. Bearbeitungsmaschine nach einem der vorhergehenden Ansprüche, **dadurch gekennzeichnet, dass** die Werkstückspindeln (23, 25) jeweils Schiebemittel zum gesteuerten Durchschieben einer Werkstückstange aufweisen.

8. Bearbeitungsmaschine, nach einem der vorhergehenden Ansprüche, **dadurch gekennzeichnet, dass** die Werkstückspindeln (23, 25) jeweils auf einer Kreuzschlittenanordnung (29) verfahrbar gelagert sind, die übereinander angeordnet einen sich in X-Raumrichtung erstreckenden X-Schlitten (30) und einen sich in Z-Richtung erstreckenden Z-Schlitten (31) aufweist.

9. Bearbeitungsmaschine nach einem der vorhergehenden Ansprüchen, **dadurch gekennzeichnet, dass** zusätzlich zum schwenkbaren Werkzeugkopf (32) wenigstens eine weitere Bearbeitungsstation (39) zur Werkstückbearbeitung vorgesehen ist.

10. Bearbeitungsmaschine nach Anspruch 9, **dadurch gekennzeichnet, dass** eine der weiteren Bearbeitungsstationen als Fräs- /Drehstation zur Fräs- und/oder Drehbearbeitung von Werkstücken (12) ausgebildet ist.

11. Bearbeitungsmaschine nach Anspruch 10, **dadurch gekennzeichnet, dass** die Fräs-/ Drehstation ein Werkzeugmagazin (40) in Form eines Drehrevolvers zur Aufnahme von unterschiedlichen Werkzeuganordnungen (41), insbesondere angetriebenen Fräsköpfen und/oder Drehmeißeln, aufweist.

12. Bearbeitungsmaschine nach Anspruch 11, **dadurch gekennzeichnet, dass** die Fräs-/ Drehstation unverfahrbar ausgebildet ist.

13. Bearbeitungsmaschine nach Anspruch 11, **dadurch gekennzeichnet, dass** die Fräs-/Drehstation in Y-Raumrichtung verfahrbar ausgebildet ist.

14. Bearbeitungsmaschine nach einem der vorhergehenden Ansprüche, **gekennzeichnet durch** ein Maschinenbett (21), das in einer **durch** die X- und Z-Raumrichtung aufgespannte Ebene liegt, die im Winkel zur Horizontalen ausgerichtet ist.

## Claims

1. Machining centre for machining workpieces (12), in particular for milling and/or turning operations, comprising a first work spindle (23) capable of being driven rotationally about a first spindle axis (22) and a second work spindle (25) capable of being driven rotationally about a second spindle axis (24), wherein each of the two spindle axes (22, 24) is oriented in a Z-direction in space of a co-ordinate system represented by three mutually perpendicular directions in space X, Y and Z and wherein the second work spindle (25) is traversable in the Z-direction in space, and comprising at least one tool head (32) assigned to the work spindles (24, 25), which is traversable in the Y-direction in space and pivotably mounted about a pivot axis (33) oriented in the X-direction, **characterised in that** the two work spindles (23, 25) are arranged parallel to and offset from one another in any machining position and traversable in the X- and Z-directions in space.

2. Machining centre according to claim 1, **characterised in that** the tool head (32) is designed free of any traversability in the X- and Z-directions.

3. Machining centre according to claim 1 or 2, **characterised in that** the tool head (32) is designed as a tool spindle.

4. Machining centre according to claim 3, **characterised in that** the tool head (32) is designed for mounting milling and turning tools.

5. Machining centre according to any of the preceding claims, **characterised in that** the work spindles (23, 25) are provided with work supports (27, 28) oriented in opposite directions.

6. Machining centre according to any of the preceding claims, **characterised in that** each of the work spindles (23, 25) comprises a drive motor designed for rotary positioning for milling operations and for rotation for turning operations.

7. Machining centre according to any of the preceding claims, **characterised in that** each of the work spindles (23, 25) comprises pushing means for the controlled pushing-through of bar stock.

8. Machining centre according to any of the preceding claims, **characterised in that** each of the work spindles (23, 25) is traversably mounted on a compound slide arrangement (29) with an X-slide (30) extending in the X-direction in space and a Z-slide (31) extending in the Z-direction in space placed one above the other.

9. Machining centre according to any of the preceding claims, **characterised in that**, in addition to the pivotable tool head (32), at least one further machining station (39) is provided for machining workpieces.

10. Machining centre according to claim 9, **characterised in that** one of the further machining stations is designed as a milling/turning station for milling and/or turning workpieces (12).

11. Machining centre according to claim 10, **characterised in that** the milling/turning station comprises a tool magazine (40) in the form of a four-way turret for mounting different tool arrangements (41), in particular power-driven milling heads and/or turning tools.

12. Machining centre according to claim 11, **characterised in that** the milling/turning station is non-traversable.

13. Machining centre according to claim 11, **characterised in that** the milling/turning station is traversable in the Y-direction in space.

14. Machining centre according to any of the preceding claims, **characterised by** a machine bed (21) lying in a plane defmed by the X- and Z-directions in space and oriented at an angle relative to the horizontal.

## Revendications

1. Machine de traitement destinée à traiter des pièces à usiner (12), en particulier au traitement de fraisage et/ou au tour, comprenant une première broche de pièce à usiner (23) pouvant être entraînée en rotation autour d'un premier axe de broche (22) et une seconde broche de pièce à usiner (25) pouvant être entraînée en rotation autour d'un second axe de broche (24), les deux axes de broche (22, 24) étant orientés respectivement dans une direction spatiale Z d'un système de coordonnées formé par trois directions spatiales X, Y et Z perpendiculaires les unes aux autres, et la seconde broche de pièce à usiner (25) étant conçue de manière à pouvoir se déplacer dans la direction spatiale Z, et comprenant au moins une tête d'outil (32) associée aux broches de pièce à usiner (24, 25), pouvant se déplacer dans la direction spatiale Y et montée pivotante autour d'un axe de pivotement (33) orienté dans la direction X, **caractérisée en ce que** les deux broches de pièce à usiner (23, 25) sont disposées en étant décalées parallèlement l'une par rapport à l'autre dans une position de traitement respective et sont conçues de manière à pouvoir se déplacer respectivement dans les directions spatiales X et Z.

2. Machine de traitement selon la revendication 1, **caractérisée en ce que** la tête d'outil (32) ne peut se déplacer dans les directions spatiales X et Z.

3. Machine de traitement selon la revendication 1 ou 2, **caractérisée en ce que** la tête d'outil (32) est conçue comme une broche d'outil.

4. Machine de traitement selon la revendication 3, **caractérisée en ce que** la tête d'outil (32) est conçue pour recevoir des outils de fraisage et de tour.

5. Machine de traitement selon l'une quelconque des revendications précédentes, **caractérisée en ce que** les broches de pièce à usiner (23, 25) comprennent des logements de pièce à usiner (27, 28) orientés dans des directions opposées les unes aux autres.

6. Machine de traitement selon l'une quelconque des revendications précédentes, **caractérisée en ce que** les broches de pièce à usiner (23, 25) comprennent respectivement un moteur d'entraînement conçu pour un positionnement rotatif pour le traitement par fraisage et pour une rotation pour le traitement au tour.

7. Machine de traitement selon l'une quelconque des revendications précédentes, **caractérisée en ce que** les broches de pièce à usiner (23, 25) comprennent respectivement des moyens coulissants destinés à la poussée traversante commandée d'une tige de pièce à usiner.

8. Machine de traitement selon l'une quelconque des revendications précédentes, **caractérisée en ce que** les broches de pièce à usiner (23, 25) sont logées de manière à pouvoir se déplacer respectivement sur un ensemble chariot porte-outil à mouvements croisés (29) comprenant un chariot X (30) s'étendant dans la direction spatiale X et un chariot Z (31) s'étendant dans la direction Z superposés.

9. Machine de traitement selon l'une quelconque des revendications précédentes, **caractérisée en ce qu'**au moins un autre poste de traitement (39) pour le traitement de la pièce à usiner est prévu en plus de la tête d'outil pivotante (32).

10. Machine de traitement selon la revendication 9, **caractérisée en ce qu'**un des autres postes de traitement est conçu comme un poste de fraisage/de tour destiné au traitement de fraisage et/ou au tour de pièces à usiner (12).

11. Machine de traitement selon la revendication 10, **caractérisée en ce que** le poste de fraisage/de tour comprend une resserre (40) sous forme d'une tourelle rotative destinée à loger différents ensembles d'outil (41), en particulier des têtes de fraisage et/ou outils entraînés.

12. Machine de traitement selon la revendication 11, **caractérisée en ce que** le poste de fraisage/de tour est immobile.

13. Machine de traitement selon la revendication 11, **caractérisée en ce que** le poste de fraisage/de tour est conçu de manière à pouvoir se déplacer dans la direction spatiale Y.

14. Machine de traitement selon l'une quelconque des revendications précédentes, **caractérisée par** un socle de machine (21) situé dans un plan défini par les directions spatiales X et Z et orienté à angle droit par rapport à l'horizontale.
